# EUROPEAN PATENT APPLICATION

(11) **EP 1 811 352 A2**
(43) Date of publication of application: **25.07.2007**
(21) Application number: 06027104.6
(22) Date of filing: 29.12.2006
(51) Int. Cl.: G05B 19/404, G05B 19/414

(54) **Motor control system**

(30) Priority: 12.01.2006 JP 2006005077
(71) Applicant: FANUC LTD, Minamitsuru-gun, Yamanashi 401-0597 (JP)
(72) Inventor: Aoyama, Kazunari, Oshino-mura Minamitsuru-gun Yamanashi401 (JP); Komaki, Kunitaka, Minamitsuru-gun Yamanashi 401-0301 (JP); Aizawa, Yasuharu, Minamitsuru-gun Yamanashi 401-0302 (JP); Miura, Masahiro, Oshino-mura Minamitsuru-gun Yamanashi401 (JP)
(74) Representative: Thum, Bernhard

(57) **Abstract**

A motor control system capable of outputting motor control data contained in a numeric control device and inputting motor control data to the numeric control device as required, without using a proprietary connector and/or a switching unit. The control system has a numeric control device, a plurality of motor amplifiers for receiving a command from the numeric control device via a serial communication line, a plurality of motors such as servomotors each driven by each of the plurality of motor amplifiers, and a data I/O device for inputting and outputting motor control data, as analog data or digital data, included in software in the numeric control device. The data I/O device may also transmit motor control data, to the numeric control device, as analog or digital data.

## Description

### BACKGROUND OF THE INVENTION

### 1. Field of the Invention

The present invention relates to a motor system, including a numeric control device for controlling a plurality of robots, and a data I/O device for inputting or outputting control data for motors.

### 2. Description of the Related Art

In a numeric control for a motor such as a servomotor, in order to exploit the inherent performance of the motor or an amplifier and realize a control with high speed and high accuracy, servo adjustment and parameter adjustment for the motor control are carried out. To this end, it is necessary to read control data (for example, regarding a speed command, a torque command and the speed and the position of the motor) in software, for controlling the motor, contained in a numeric control device and then to display the control data on a display of the numeric control device or on an oscilloscope.

When the control data is displayed on the oscilloscope, the data must be converted to analog data, which is suitable for monitoring on the oscilloscope. Therefore, a data input/output (I/O) device for converting the data is used in this case. In the prior art, such a data I/O device is connected to a proprietary connector arranged in an amplifier for the servomotor or is contained in the amplifier.

On the other hand, Japanese Patent Publication No. 3615596 discloses a numeric control device having a mechanical side position detecting control unit connected to a serial communication line.

When the data I/O device for controlling the motor is connected to or contained in a numeric control device, it is necessary to connect all output lines of a motor control processor of the device to the above proprietary connector. Recently, the number of axes (or the number of servomotors) to be controlled by the numeric control device has increased. In this case, a complicated circuit including a switching unit or the like is necessary. However, even when the switching unit is used, if the number of the axes to be controlled is from several dozens to several hundreds, the wiring area and the number of branches of the circuit may be very large, resulting in problems such as an increase in cost, low noise resistance and/or a disturbance of the waveform of the device.

Also, when the data for controlling the motor is displayed on the display of the numeric control device, an external timing signal and/or an output of a sensor may be displayed as well as the data for controlling the motor. However, just providing an inputting part to the data I/O device would not solve the above problems. At this point, when the numeric control device is connected to a fieldbus used in a conventional PLC (Programmable Logic Controller) such that data may be inputted or outputted to or from software for controlling the motor, the data may be inputted or outputted via the PLC. However, as the transfer time cycle of the fieldbus is long, the high synchronization accuracy required for the servomotor cannot be obtained.

On the other hand, when the data I/O device for controlling the motor is connected to or contained in the amplifier of the servomotor, only motor control data in relation to the amplifier in question may be processed. In this case, therefore, it is necessary to provide data I/O devices to all amplifiers or, otherwise, to switch one data I/O device to another.

As described above, Japanese Patent Publication No. 3615596 discloses a position detecting control unit connected to a serial communication line. However, this document discloses or suggests neither a data I/O device for controlling a motor nor the effect of connecting the I/O device to the serial line. Further, the position detecting control unit is not connected to the serial line such that the unit may be separated from the serial line in a hot plug state (i.e., in the hot plug state, the connection between the numeric control device and the amplifier is available even when the position detecting unit is separated from the line). Therefore, although this system has a merit that the number of connectors may be reduced, the position detecting unit has to be always connected to the system as an essential component.

### SUMMARY OF THE INVENTION

Accordingly, an object of the present invention is to provide a motor control system capable of outputting motor control data in a numeric control device and, if desired, inputting control data in the numeric control device, without using a proprietary connector and a switching unit.

To this end, according to the present invention, there is provided a motor control system comprising: a numeric control device; a plurality of motor amplifiers for receiving a command from the numeric control device via a serial communication line; a plurality of motors each driven by each of the plurality of motor amplifiers; and a data input/output device for inputting and outputting control data for the plurality of motors, wherein the data input/output device is configured to input and output the control data in the numeric control device via the serial communication line.

The control data for the plurality of motors in the numeric control device outputted from the data input/output device may include at least one of a speed command, a torque command and the speed and the position of the motor.

The motors may be servomotors and, in this case, the servomotors are adjusted by the control data for the plurality of motors in the numeric control device outputted from the data input/output device.

The data input/output device may be configured to input control data for the plurality of motors, to the numeric control device, via the serial communication line.

The motors may be servomotors and, in this case, the servomotors are adjusted by the control data for the plurality of motors inputted to the numeric control device from the data input/output device.

The motor control system may further include a sensor for measuring the motions of components driven by the motors and a data processing device for comparing detected data by the sensor with the data outputted from the data input/output device in relation to factors including timing.

The data input/output device may be configured to switch, at an arbitrary timing, which control data for the motors is used.

The motor control system may further include a data processing device for receiving data indicating motor loads of the motors outputted from the data input/output device and for transmitting a signal for reducing the motor loads to the data input/output device based on the data indicating the motor loads.

It is preferable that the data input/output device is connected to the serial communication line such that the data input/output device may be connected to and separated from the serial communication line in a hot plug state.

The data input/output device may be structurally integrated with the numeric control device or the motor amplifier.

The data input/output device may be connected to a serial communication line which connects the numeric control device and the motor amplifiers such that a synchronized operation may be carried out, whereby a data input/output operation may also be operated in synchronization with the synchronized operation.

### BRIEF DESCRIPTION OF THE DRAWINGS

The above and other objects, features and advantages of the present invention will be made more apparent by the following description of the preferred embodiments thereof, with reference to the accompanying drawings, wherein:
Fig. 1 shows a schematic configuration of a motor control system according to the present invention;
Figs. 2a to 2c are views explaining a first embodiment of the invention for adjusting backlash acceleration, indicating states in which a parameter adjustment is unnecessary, underestimated and overestimated, respectively;
Fig. 3 shows a schematic view of a belt conveyor as a second embodiment of the invention;
Fig. 4 is a graph indicating a change of the conveying speed of a print board by the belt conveyor of Fig. 3, corresponding to the positions in the conveying direction of the belt conveyor; and
Fig. 5 shows a schematic view of a rotary indexing device as a third embodiment of the invention.

### DETAILED DESCRIPTION

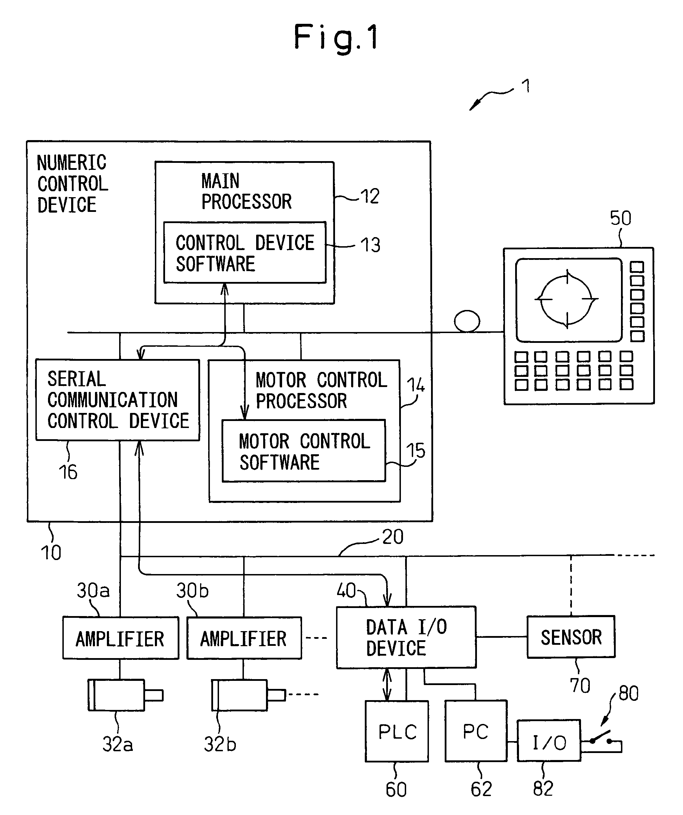

Hereinafter, the present invention is described with reference to the drawings. Fig. 1 is a schematic configuration of a motor control system 1 according to the present invention. A concrete example of the system 1 is described later. As shown in Fig. 1, the motor control system 1 includes a numeric control device 10; a plurality of (two in the illustrated example) amplifiers 30a and 30b connected to the numeric control device 10 via a serial communication line 20; motors 32a and 32b such as servomotors driven by the amplifiers 30a and 30b; and a data input/output (I/O) device 40 configured to input and output control data for the motors included in software in the numeric control device 10 as analog or digital data. Also, the data I/O device 40 may transmit the control data to the numeric control device 10 as analog or digital data.

The data I/O device 40 is preferably connected to the serial line 20 such that the device 40 may be connected to or separated from the line in a hot plug state. In this case, the I/O device 40 may be separated from the system 1 while the communication between the numeric control device 10 and the amplifiers 30a, 30b is available. Therefore, the I/O device 40 may be connected to the system 1 and used only when necessary and may be connected to another system and used.

As long as the data I/O device 40 is substantially connected to the serial line 20, the I/O device 40 may be structurally integrated with the numeric control device or the amplifier (i.e., for example, a case of the amplifier 30a). In this case, the I/O device 40 may transfer data to and from not only the amplifier in which the I/O device incorporated but also another amplifier and/or the numeric control device.

The numeric control device 10 may have a main processor 12 including software 13 for controlling the whole system, a motor control processor 14 including software 15 for controlling the motors, and a serial communication control device 16 for controlling the communication via the serial communication line 20. A display 50 for displaying contents of various operations by the system 1 and obtained data may be connected to the numeric control 10. Also, a PLC (Programmable Logic Controller) 60 for inputting external data and a data processing device such as a PC (personal computer) 62 may be connected to the I/O device 40. Further, a sensor 70 for detecting the positions of the motors 32a and 32b may be connected to the I/O device 40.

The motors in the system 1 are controlled as described below. The motor control processor 14 calculates the rotating speed of the motor, during a period of speed control, according to a motor command calculated by the main processor 12. To this end, the motor control processor 14 also calculates a necessary torque or a current command value during a period of current control. The motor control processor 14 further calculates on/off information of a transistor in the servo amplifier for switching current to the motor. The motor control processor 14 transmits the calculated on/off information as packet data to the servo amplifiers 30a and 30b connected to the serial line 20 via a serial communication control device 16. Then, the amplifiers 30a and 30b send the commanded current to the motors 32a and 32b so as to rotate the motors. In addition, in servomotor control requiring high speed and high accuracy, the period of current control or a data update rate is very high, for example, 16 kHz. Therefore, there is synchronization, with high accuracy, between the data update process of the on/off information transmitted via the serial line 20 and the period of current control in the motor control processor 14.

According to the motor control system of the invention, in various mechanical systems including three embodiments as described below, a machine accuracy, an accuracy of a synchronized operation and a motor load may be monitored and checked. Concretely, the motor control data stored in the motor control processor 14 of the numeric control device 10 may be outputted from the data I/O device 40 via the serial communication control device 16 and, in the PC 62, the outputted data may be compared to a signal or data from the position sensor 70. For example, in relation to the positional information of a servomotor in a machine tool, feedback signals from the I/O device 40 may be compared to the position sensor 70, whereby the machine accuracy of the machine tool, in relation to factors including timing, may be checked, monitored or analyzed.

Also, the motor control data (for example, a torque command (TCMD)) stored in the motor control processor 14 of the numeric control device 10 may be transmitted from the data I/O device 40 to the PC 62 via the serial communication control device 16, whereby the motor load may be monitored for a predetermined period of time. Due to this, if the motor load is relatively large, a load reducing signal may be transmitted from the PC 62 to the data I/O device 40, so as to automatically decrease a processing speed. In this case, as shown in Fig. 1, for example, an activating switch 80 may be connected to the PC 62 via an I/O device 82 such that data in relation to the motor load may be transmitted to the PC 62 by using on/off signals from the switch 80 as a trigger.

Next, some preferred embodiments using the above system 1 of the invention are described below. First, as a first embodiment, when the motor controlled by the above system 1 is a servomotor, backlash acceleration may be advantageously adjusted by using the system 1. When the influence of backlash or friction in a mechanical system is large, a reversing operation of the motor may be delayed, whereby so-called "a quadrant projection" may be generated on an object to be worked in an arc shape. The backlash acceleration is a function to reduce or eliminate the quadrant projection. According to the invention, parameters for the backlash acceleration may be adjusted by a procedure as described below, so as to improve the quadrant projection.

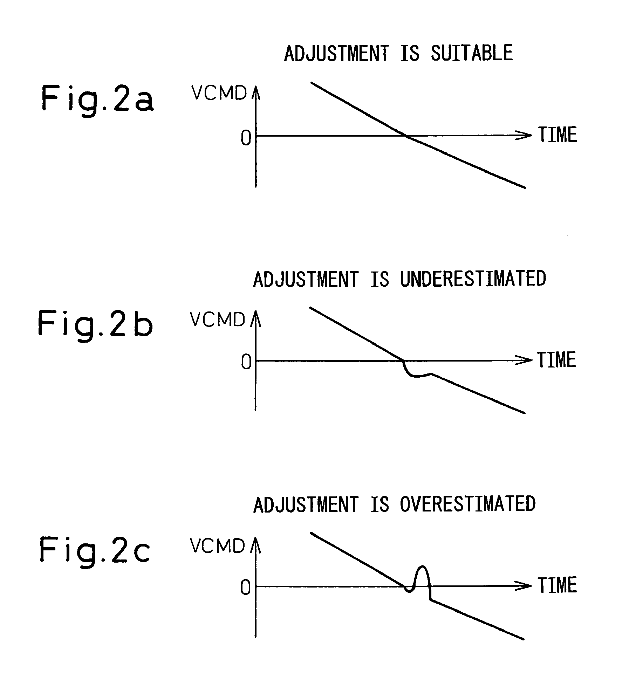

First, a program for machining an arc shape is executed. Then, a speed command (VCMD) included in the data in a motor control software 15 of the motor control processor 14 is outputted and monitored. A conventional oscilloscope may be used for monitoring the command. At this point, a waveform of the VCMD, at the time of reversing the rotation of the motor (i.e., when the value of the speed command passes through a GND), is monitored. When a suitable machining is carried out by a suitable adjustment, the waveform appears as shown in Fig. 2a. On the other hand, if the above quadrant projection is actually generated on the object, the waveform appears as shown in Fig. 2b. In this case, a parameter regarding the backlash acceleration stored in the numeric control device 10 is reset to a larger value, based on an input from the data I/O device 40. Inversely, if a notch is generated on the object, instead of the quadrant projection, the waveform appears as shown in Fig. 2c. In this case, the above parameter is reset to a smaller value, also based on an input from the data I/O device 40. In this way, by means of the I/O device 40, the operation of the servomotor may be optimized.

Next, as a second embodiment using the motor control system of the invention, a belt conveyor unit, having a barcode reader for reading a barcode on a printed board conveyed on the device, is explained. This unit has a belt conveyor 102 for conveying an object such as a printed board 100, position sensors 70a, 70b and 70c for detecting the position of the printed board 100, and a barcode reader 104 for reading a barcode (not shown) formed on the printed board 100. The belt conveyor 102 conveys the printed board 100 at a conveying speed equal to or lower than a speed at which the barcode reader 104 can read the barcode on the board 100 only when the barcode reader should read the barcode. Otherwise, the conveying speed of the belt conveyor 102 may be the higher speed (for example, the maximum conveying speed). On the other hand, the sensors 70a, 70b and 70c correspond to the above sensor 70. The sensors 70a, 70b and 70c are configured to detect the arrival of the printed board 100 at a speed decreasing position P1 before a barcode reading zone S and start and end positions P2 and P3 of the barcode reading zone S, respectively.

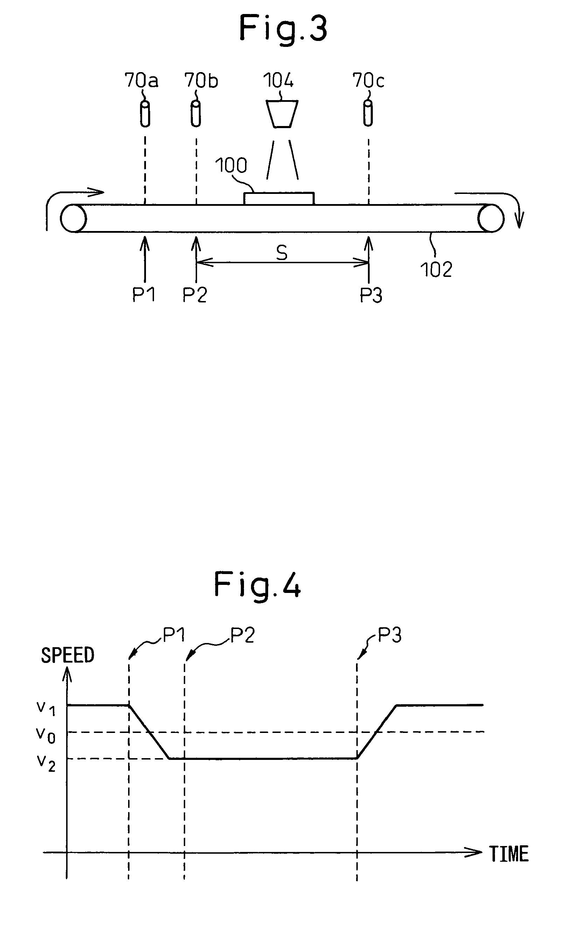

Fig. 4 is a graph showing a change of the conveying speed of the belt conveyor 102 in relation to the positions arranged along the conveying direction. Before the arrival at the speed decreasing position P1, the printed board 100 is conveyed at a speed v1 which is faster than a speed v0 at which the barcode reader 104 can read the barcode on the board 100. When the sensor 70a detects the arrival of the board 100 at the position P1, the belt conveyor starts to decrease the conveying speed thereof. Then, before the arrival at the start position P2 of the barcode reading zone S, the conveying speed of the board 100 is decreased to a speed v2 which is lower than the speed v0. When the sensor 70b detects that the board 100 enters the zone S, a detection signal from the sensor 70b is inputted to the I/O device 40 and the I/O device transfers the signal to the numeric control device 10. The numeric control device 10 indicates a waveform of the speed command of the motor (or the speed of the belt conveyor) and the detection signal on the display 50, whereby the operator can check whether the conveying speed in the barcode reading zone S is equal to or lower than the speed v0. Next, when the sensor 70c detects that the board 100 leaves the zone S, the speed of the belt conveyor 102 is increased to the speed v1 again. Accordingly, by executing a feedback process in the PC 62 in relation to the signal or the data from the I/O device 40 and the sensors 70a, 70b and 70c, the feedbacks from the I/O device 40 and the sensors, regarding the positional information of the servomotor for driving the belt conveyor, may be compared with each other, whereby the machine accuracy may be checked, monitored or analyzed in relation to factors including timing.

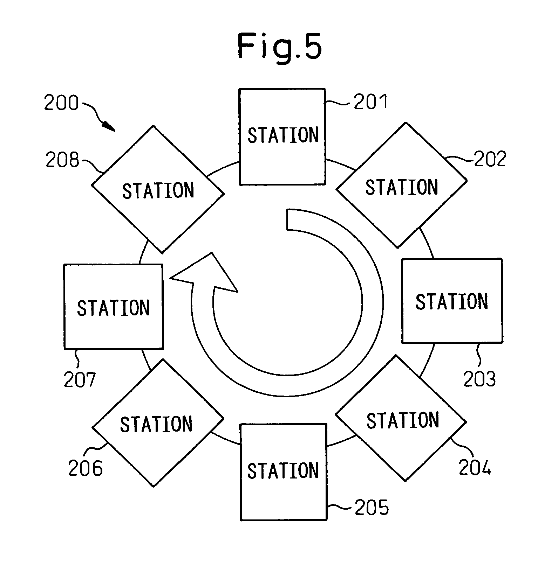

Next, as a third embodiment using the motor control system of the invention, a rotary index unit 200 having a plurality of process station, as shown in Fig. 5, is explained. The device 200 has a plurality of (eight in this case) stations 201 to 208 arranged such that they together form a general circle shape. In this unit, one cycle of processing of a not shown workpiece is carried out (i.e., the workpiece is sequentially processed from the station 201 to the station 208). In the prior art, when a workpiece is found to have a defective machining accuracy after one cycle of processing in such a unit, each processing in each station must be checked one by one in order to find which station has a trouble or a problem. This check wastes much time and workload. In general, the defective machining accuracy in the station may be generated by interference between a movable part of the unit and external equipment or, by an unsuitable depth of cut of a tool into the workpiece. In many cases, therefore, the defective machining accuracy may be found as a change or a defect of a torque command of a servomotor used in each station. According to the invention, the data I/O device 40 may be used to first output torque data of a servomotor in the station 201 during the processing of the station 201 and, then, to output torque data of a servomotor in the next station 202 during the processing of the station 202, in one cycle of processing. In this way, by outputting the torque data of the servomotor of the station in which the workpiece is machined such that the torque data may be switchingly outputted and monitored corresponding to the progress of the machining, information required for judging a malfunction of the system only may be obtained. Therefore, when a malfunction occurs in a cycle of processing, a site of the system or the station having the malfunction may be immediately identified.

Further, in a system in which the state of a workpiece is monitored by a sensor and a new command is applied to a servomotor when the workpiece is machined to a certain position (or a station), if an input of the sensor is not synchronized with the control of the servomotor, an input timing from the sensor may be unsuitable in each processing. Accordingly, a timing of the command applied to the servomotor may be also unsuitable, resulting in decrease of machining accuracy. However, in a servo system using a serial communication line, a communication method, in which servo shafts may be controlled in synchronization with each other, may be used. Therefore, an input signal from the data I/O device connected to the serial line may be also synchronized with the control of the servo shafts. Accordingly, by inputting a signal from the sensor to the I/O device as a command to be sent to the servo shafts, the timing may be constant and the machining of accuracy may be improved.

According to the motor control system of the invention, without a proprietary connector or a switching unit for a data I/O device, the cost and the occupying area of the whole system may be reduced. Also, only one data I/O device is necessary to input/output control data for a plurality of motors, whereby the monitoring of an accuracy of the system and the detection of a malfunction of the system may be easily performed. In addition, by connecting the data I/O device to a serial communication line in a hot plug state, when the control data is not necessary to be inputted or outputted, the I/O device may be removed from the system and used in another system, whereby the cost of the system may be further reduced.

While the invention has been described with reference to specific embodiments chosen for the purpose of illustration, it should be apparent that numerous modifications could be made thereto, by one skilled in the art, without departing from the basic concept and scope of the invention.

## Claims

1. A motor control system (1) comprising:
a numeric control device (10);
a plurality of motor amplifiers (30a, 30b) for receiving a command from the numeric control device (10) via a serial communication line (20);
a plurality of motors (32a, 32b) each driven by each of the plurality of motor amplifiers (30a, 30b); and
a data input/output device (40) for inputting and outputting control data for the plurality of motors (32a, 32b), **characterized in that**
the data input/output device (40) is configured to input and output the control data in the numeric control device (10) via the serial communication line (20).

2. The motor control system according to claim 1, wherein the control data for the plurality of motors (32a, 32b) in the numeric control device (10) outputted from the data input/output device (40) includes at least one of a speed command, a torque command and the speed and the position of the motor.

3. The motor control system according to claim 1, wherein the motors (32a, 32b) are servomotors and the servomotors are adjusted by the control data for the plurality of motors (32a, 32b) in the numeric control device (10) outputted from the data input/output device (40).

4. The motor control system according to claim 1, wherein the data input/output device (40) is configured to input control data for the plurality of motors (32a, 32b) to the numeric control device (10) via the serial communication line (20).

5. The motor control system according to claim 4, wherein the motors (32a, 32b) are servomotors and the servomotors are adjusted by the control data for the plurality of motors (32a, 32b) inputted to the numeric control device (10) from the data input/output device (40).

6. The motor control system according to claim 1, further comprising a sensor (70) for measuring the motions of components driven by the motors (32a, 32b) and a data processing device (60, 62) for comparing detected data by the sensor (70) with the data outputted from the data input/output device (40) in relation to factors including timing.

7. The motor control system according to claim 1, wherein the data input/output device (40) is configured to switch, at an arbitrary timing, which control data for the motors (32a, b) is used.

8. The motor control system according to claim 1, further comprising a data processing device (62) for receiving data indicating motor loads of the motors (32a, 32b) outputted from the data input/output device (40) and for transmitting a signal for reducing the motor loads to the data input/output device (40) based on the data indicating the motor loads.

9. The motor control system according to claim 1, wherein the data input/output device (40) is connected to the serial communication line (20) such that the data input/output device (40) may be connected to and separated from the serial communication line (20) in a hot plug state.

10. The motor control system according to claim 1, wherein the data input/output device (40) is structurally integrated with the numeric control device (10) or the motor amplifier (30a, 30b).

11. The motor control system according to claim 1, wherein the data input/output device (40) is connected to a serial communication line (20) which connects the numeric control device (10) and the motor amplifiers (30a, 30b) such that a synchronized operation may be carried out, whereby a data input/output operation may also be operated in synchronization with the synchronized operation.
